# EUROPEAN PATENT APPLICATION

(11) **EP 1 921 121 A1**
(43) Date of publication of application: **14.05.2008**
(21) Application number: 07021461.4
(22) Date of filing: 05.11.2007
(51) Int. Cl.: C09J 123/08, C09J 123/16, B29C 44/18, C08L 21/00, C08L 23/08, C08L 63/00, C08L 77/00

(54) **Two stage sealants and method of forming and/or using the same**

(30) Priority: 08.11.2006 US 864880 P; 25.10.2007 US 924148
(71) Applicant: Zephyros Inc., Romeo, MI 48065 (US)
(72) Inventor: Walker, Jason, Lenox, MI 48048 (US); Chmielewski, Craig, Shelby Twp., MI 48315 (US); Harrison, JR, Edward, Sterling Heights, MI 48314 (US); Bradley, Jeffery, Imlay City, MI 48444 (US)
(74) Representative: Bawden, Peter Charles

(57) **Abstract**

A sealant is configured to activate (e.g., cure and/or foam) in two stages (e.g., of two distinct portions of time). Advantageously, the sealant can exhibit self supporting characteristics during the second activation at least partly because of the first activation.

## Description

### CLAIM OF PRIORITY

This application claims the benefit of the filing date of US Provisional Serial No. 60/864,880 filed November 8, 2006, along with U.S. Application Serial No. 11/924,148 filed October 25, 2007 all of which are hereby incorporated by reference for all purposes.

### TECHNICAL FIELD

The present invention relates to sealants that activate to seal or baffle of cavity of a structure. More particularly, the present invention relates to sealants, and particularly baffles, that can be activated to expand (e.g., foam) and/or cure and which exhibit self-supporting characteristics during such activation.

### BACKGROUND OF THE INVENTION

Industry, particularly the automotive industry, has been seeking to form improved sealants, particularly baffles for automotive vehicles and other articles of manufacture. Traditionally, automotive baffles have been formed of a carrier that is designed to span a cavity of a structure of an automotive vehicle wherein that carrier would include expandable, (e.g., foamable) material about its periphery. When placed in the cavity, the expandable material could be expanded to seal between the periphery of the carrier and the walls of the structure. Formation of such baffles can be expensive since it often requires the formation of a relatively complex shaped carrier and can require expensive processing machinery to form and locate the expandable material as desired. As such, it would be desirable to form a seal, particularly a baffle, that can be formed substantially entirely of expandable material and/or that can be formed relatively inexpensively. However, it is quite difficult to form such as seal or baffle since such expandable materials, particularly lower cost expandable materials, do not typically exhibit sufficient or desired self-supporting characteristic during expansion and, in turn, such materials, can sag and/or undesirably flow such they are incapable or at least undesirable for sealing and baffling of cavities, particularly of larger cavities.

### SUMMARY OF THE INVENTION

Accordingly, there is disclosed a method of baffling or sealing a structure. The method includes provision of a sealer, the sealer being formed of an activatable sealant material. Preferably, the sealant material undergoes a first activation to expand, cure or both at a first temperature that is at least about 10°C and less than about 140 °C. The sealant material is typically at least 85% by weight of the sealer. The sealer is located within a cavity of a structure of an automotive vehicle where the sealant material undergoes a second activation to foam and cure at a second temperature that is at least about 150°C and less than about 300 °C and adheres to walls of the structure. The sealant material typically expands to a volume that is at least 400% its original unexpanded volume during the first activation, the second activation or both. The sealant material also typically exhibits self supporting characteristics during the second activation because of the first activation.

### BRIEF DESCRIPTION OF THE DRAWING

The features and inventive aspects of the present invention will become more apparent upon reading the following detailed description, claims, and drawings, of which the following is a brief description:
Fig. 1 illustrates an exemplary application of an exemplary sealer according to an aspect of the present invention.
Fig. 2 illustrates another exemplary application of an exemplary sealer according to an aspect of the present invention.
Fig. 3 illustrates another exemplary application of an exemplary sealer according to an aspect of the present invention.

### DETAILED DESCRIPTION

The present invention is predicated upon the provision of novel sealant materials or sealant parts that are configured or formulated to expand (e.g., foam) and exhibit self-supporting characteristics such that the sealants can form more robust seals, baffles or the like. For achieving such characteristics, the materials or part can activate at two separate times. Additionally or alternatively, the materials or parts can be formulated with a particular material such as a relatively light weight and/or relatively high melt viscosity material (e.g., polymer) for assisting in exhibiting self supporting characteristics.

For two stage cure, the sealant material or parts can activate to foam and/or cure at a first point in time and then activate again to foam and/or cure at a second point in time. Both the first activation and the second activation can involve expansion (e.g., foaming), adhesion, reaction or curing (e.g., cross-linking or a combination thereof).

The first activation will typically take place during processing and/or formation of the sealant material. In preferred embodiments, the first activation takes place during mixing of the ingredients of the material. For example, materials being mixed in a batch mixer, extruder, combination thereof or the like can undergo activation which can include expansion (e.g. foaming) and/or reaction or curing (e.g., thermosetting or cross-linking). Preferably, the first level of activation provides for enough curing and/or thermosetting and/or expansion (e.g., foaming) to provide the desired self supporting characteristics to the sealant material. The first activation will typically take place at a temperature that is at least about 10 °C, more typically at least about 45 °C and more typically at least about 70 °C and is typically less than about 200 °C, more typically less than about 140 °C and even more typically less than about 110°C, although higher and lower temperatures are possible, unless otherwise stated.

When the first activation includes reaction and/or curing, multiple mechanisms can be used to accomplish such first reaction and/or cure. As one example, the sealant material can include acid functionalized elastomer and epoxy resin such that the elastomer and epoxy resin can react (e.g. cure, cross-link, thermoset or a combination thereof) with the elastomer. In such an embodiment, the amount of acid functionalized elastomer is typically at least about 2%, more typically at least about 9% and even more typically at least about 15% and is typically less than about 40%, more typically less than about 25% and even more typically less than about 18% by weight of the sealant material, although higher or lower amounts are possible. The amount of epoxy resin is typically at least about 1%, more typically at least about 3% and even more typically at least about 5% and typically less than about 30%, more typically less than about 15% and even more typically less than about 7% by weight of the sealant material, although higher or lower amounts are possible. As another example of a mechanism for the first reaction, the sealant material can include a lower temperature decomposing peroxide or peroxy curing agent for curing (e.g., cross-linking) peroxide or peroxy curable polymeric material (e.g., elastomer) in the sealant material. Such a peroxide will typically cure the polymeric material at a temperature that is at least about 30 °C, more typically at least about 50 °C and more typically at least about 70 °C and is typically less than about 200 °C, more typically less than about 140 °C and even more typically less than about 110°C, although higher and lower temperatures are possible. In such an embodiment, the amount of peroxide or peroxy curing agent is typically at least about 0.01%, more typically at least about 0.1% and even more typically at least about 0.6% and is typically less than about 10%, more typically less than about 4% and even more typically less than about 2% by weight of the sealant material, although higher or lower amounts are possible. The amount of polymeric material (e.g., elastomer) is typically at least about 5%, more typically at least about 15% and even more typically at least about 25% and typically less than about 90%, more typically less than about 70% and even more typically less than about 40% by weight of the sealant material, although higher or lower amounts are possible. As another example, the sealant material can include a relatively low amount of epoxy resin and a relatively low amount of epoxy curative (e.g., amine, amide or both) for curing the epoxy resin. In such an embodiment, the amount of epoxy resin is typically at least about 1%, more typically at least about 3% and even possibly at least about 6 or even 8 % and is typically less than about 25%, more typically less than about 14% and even possibly less than about 11 or 9% by weight of the sealant material, although higher or lower amounts are possible. The amount of epoxy curative is typically at least about 0.01 %, more typically at least about 0.1 % and even possibly at least about 1 or even 2 % and typically less than about 10%, more typically less than about 4% and even more typically less than about 2 % by weight of the sealant material, although higher or lower amounts are possible.

When the sealant is configured for expansion (e.g., foaming) during the first activation, the sealant material will typically include a foaming agent (e.g., a physical or chemical blowing agent) that activates for forming gas at the temperature of first activation or be chemically formulated to foam at that temperature. The first activation including any expansion (e.g., foaming) will typically take place at that is at least about 10 °C, more typically at least about 45 °C and more typically at least about 70 °C and is typically less than about 200 °C, more typically less than about 140 °C and even more typically less than about 110 °C, although higher and lower temperatures are possible. Physical blowing agents useful for such activation include thermoplastic shells that encapsulated solvents. Other suitable foaming agents (e.g., blowing agents and/or blowing agent accelerators) are discussed below.

For second activation, the sealant material will typically include ingredients (e.g., blowing agent and/or blowing agent accelerator) configured to expand (e.g., foam) the sealant material and/or ingredients (e.g., curing agent and/or curing agent accelerator) configured to cure (e.g., cross-link and/or thermoset) polymeric materials within the sealant material. It should be noted that, when the sealant material foams in the second activation, the amount of the curing in the first activation should be limited such that it does not inhibit any second stage foaming to an undesired degree.

The polymeric material can include only one type of polymer or can be an admixture of 2, 3, 4 or several different polymers. The polymeric material admixture can include a variety of different polymers, such as thermoplastics, thermosets, thermosettables, elastomers, plastomers combinations thereof or the like. For example, and without limitation, polymers that might be appropriately incorporated into the polymeric admixture include halogenated polymers, polycarbonates, polyolefins (e.g., polyethylene, polypropylene), polyethylenes, polypropylenes, poly(ethylene oxides), polysiloxane, polyethers, polyphosphazines, poly(ethyleneimines), polyamides, polyketones, polyurethanes, polyesters, polyimides, polyisobutylenes, polyacrylonitriles, poly(vinyl chlorides), poly(methyl methacrylates), poly(vinyl acetates), poly(vinylidene chlorides), polytetrafluoroethylenes, polyisoprenes, polyacrylamides, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer (EMA)), EPDM and any combination or mixtures thereof. Examples of suitable elastomers include, without limitation natural rubber, styrene-butadiene rubber, polyisoprene, polyisobutylene, polybutadiene, isoprene-butadiene copolymer, neoprene, nitrile rubber (e.g., a butyl nitrile, such as carboxy-terminated butyl nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons and the like.

It is generally preferred for the sealant material to include a substantial weight percentage one or more ethylene based polymers or olefins. Such polymers can include, without limitation, one or more acrylates, one or more acetates or both. In one preferred embodiment, the sealant material includes EVA, EMA, EPDM or any combination thereof. When included, such ethylene based polymers or olefins are typically at least about 10%, more typically at least about 20% and even more typically at least about 30% by weight of the sealant material. Such ethylene based polymer or olefins are also typically less than about 90%, more typically less than about 65% and even more typically less than about 40% by weight of the sealant material.

For at least some of the embodiments of the present invention, one or more of the polymers or other materials of the present invention can be relatively lightweight and/or can have a relatively high melt viscosity. Examples of materials that can include such characteristics include, without limitation, ethylene polymer (e.g., epdm or eva), nylon powder or the like. In such embodiments, it may also be desirable to include a relatively low amount of filler (e.g., less than 15%, 10% or even less than 5% or 3% by weight).

One or more curing agents and/or curing agent accelerators may be suitable for the sealant material for use in the first activation, the second activation or both. Thus, it is contemplated that a single curing agent may be employed or two or more curing agents may be employed. When two or more curing agents are employed, it is contemplated that the two or more agents can be from the same class or different class of curing agents and may be directed at curing same or different polymeric materials.

Amounts of curing agents and curing agent accelerators can vary widely within the sealant material depending upon the type of cellular structure desired, the desired amount or rate of expansion of the sealant material if the adhesive material is expandable, the desired properties of the sealant material or the like. Exemplary ranges for effective amounts of the curing agents, curing agent accelerators or both together present in the adhesive material range from about 0.1 % by weight to about 7 % by weight.

Preferably, the curing agents assist the sealant material in curing by crosslinking of the polymers, epoxy resins or both. It is also preferable for the curing agents to assist in thermosetting the adhesive material. Useful classes of curing agents are materials selected from aliphatic or aromatic amines or their respective adducts, amidoamines, polyamides, cycloaliphatic amines, (e.g., anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), peroxides, sulfur or mixtures thereof. Particularly preferred curing agents include modified and unmodified polyamines or polyamides such as triethylenetetramine, diethylenetriamine tetraethylenepentamine, cyanoguanidine, dicyandiamides and the like. An accelerator for the curing agents (e.g., a modified or unmodified urea such as methylene diphenyl bis urea, an imidazole or a combination thereof) may also be provided for preparing the adhesive material. It is contemplated that certain of these curing agents can be employed at non-stoichiometric or sub-stoichiometric levels to achieve a first or lesser degree of curing and/or adhesion when desired. For example, such can be employed to achieve the first cure during the first activation.

### Blowing Agent

One or more blowing agents may be employed to achieve expansion (e.g., foaming) during first or second activation. In this manner, it may be possible to lower the density of articles fabricated from the material. In addition, the material expansion can help to improve sealing capability, acoustic damping or both.

The blowing agent[s] may include one or more nitrogen containing groups such as amides, amines and the like. Examples of suitable blowing agents include azodicarbonamide, dinitrosopentamethylenetetramine, 4,4ᵢ-oxy-bis-(benzenesulphonylhydrazide), trihydrazinotriazine and N, Nᵢ-dimethyl-N,Nᵢ-dinitrosoterephthalamide.

An accelerator for the blowing agent[s] may also be provided in the sealant material. Various accelerators may be used to increase the rate at which the blowing agents form inert gasses. One preferred blowing agent accelerator is a metal salt, or is an oxide, e.g. a metal oxide, such as zinc oxide. Other preferred accelerators include modified and unmodified thiazoles or imidazoles.

Amounts of blowing agents and blowing agent accelerators can vary widely within the adhesive material depending upon the type of cellular structure desired, the desired amount of expansion of the adhesive material, the desired rate of expansion and the like. Exemplary ranges for the amounts of blowing agent and blowing agent accelerator in the adhesive material range from about 0.001 % by weight to about 17 % by weight and are preferably in the adhesive material in fractions of weight percentages.

Preferably, the sealant material, the blowing agent or both of the present invention are thermally activated. Alternatively, other agents may be employed for realizing activation by other means, such as moisture, radiation, or otherwise.

The sealant material may also include one or more fillers, including but not limited to particulated materials (e.g., powder), beads, microspheres, nanoparticles or the like. Preferably the filler includes a relatively low-density material that is generally non-reactive with the other components present in the adhesive material.

Examples of fillers include silica, diatomaceous earth, glass, clay, talc, pigments, colorants, glass beads or bubbles, glass, carbon ceramic fibers, antioxidants, and the like. Such fillers, particularly clays, can assist the adhesive material in leveling itself during flow of the material. The clays that may be used as fillers may include nanoparticles of clay and/or clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite, wollastonite or mixtures thereof. The clays may also include minor amounts of other ingredients such as carbonates, feldspars, micas and quartz. Titanium dioxide might also be employed. In one or more embodiments of the present invention, it can be desirable for as substantial portion (e.g., 40%, 70% or more) of the fillers (e.g., the mineral fillers such as wollastonite or the others) to have a relatively high aspect ratio of greater than or equal to 2 to 1, although possibly lower, more typically greater than or equal to 3 or 4 to 1, and possibly greater than or equal to 8 to 1, 12 to 1, 20 to 1 or more.

In one preferred embodiment, one or more mineral or stone type fillers such as calcium carbonate, sodium carbonate or the like may be used as fillers. In another preferred embodiment, silicate minerals such as mica may be used as fillers. It has been found that, in addition to performing the normal functions of a filler, silicate minerals and mica in particular improved the impact resistance of the cured adhesive material.

When employed, the fillers in the sealant material can range from 1 % to 90 % by weight of the sealant material. According to some embodiments, the sealant material may include from about 3 % to about 30 % by weight, and more preferably about 10 % to about 20 % by weight clays, mineral fillers or other fillers.

It is contemplated that one of the fillers or other components of the material may be thixotropic for assisting in controlling flow of the material as well as properties such as tensile, compressive or shear strength.

### Other Additives

Other additives, agents or performance modifiers may also be included in the adhesive material as desired, including but not limited to a UV resistant agent, a flame retardant, an impact modifier, a heat stabilizer, a UV photoinitiator, a colorant, a processing aid, an anti-oxidant, a lubricant, a coagent, a reinforcement (e.g., chopped or continuous glass, glass fiber, ceramics and ceramic fibers, aramid fibers, aramid pulp, carbon fiber, acrylate fiber, polyamide fiber, polypropylene fibers, combinations thereof or the like). In one preferred embodiment, for example, an acrylate coagent may be employed for enhancing cure density. It is also contemplated that the sealant material may include about 0.10 to about 5.00 weight percent of an anti-oxidant such as a propionate (e.g., pentaerythritol tetrakis (3-(3,5-di-tert-butyl-4-hydroxyphenyl) propionate)) for assisting in controlling oxidation, cure rate or both. An example of such an anti-oxidant is sold under the tradename IRGANOX^{®} 1010 and is commercially available from Ciba Specialty Chemicals Company, 141 Klybeckstrasse, Postfach, 4002 Basel, Switzerland.

While it is generally contemplated that the second activation can occur before or after application of the sealant to an article of manufacture, it is typically desirable for such activation to occur after such application. Once formed or after first activation, the sealer can be applied to a variety of articles of manufacture such as buildings, furniture, vehicles (e.g., automotive or aerospace vehicles) or the like. In or for such articles, the sealer can be used to seal gaps, holes or other openings. The sealer has been found particularly useful as a baffle for automotive vehicle.

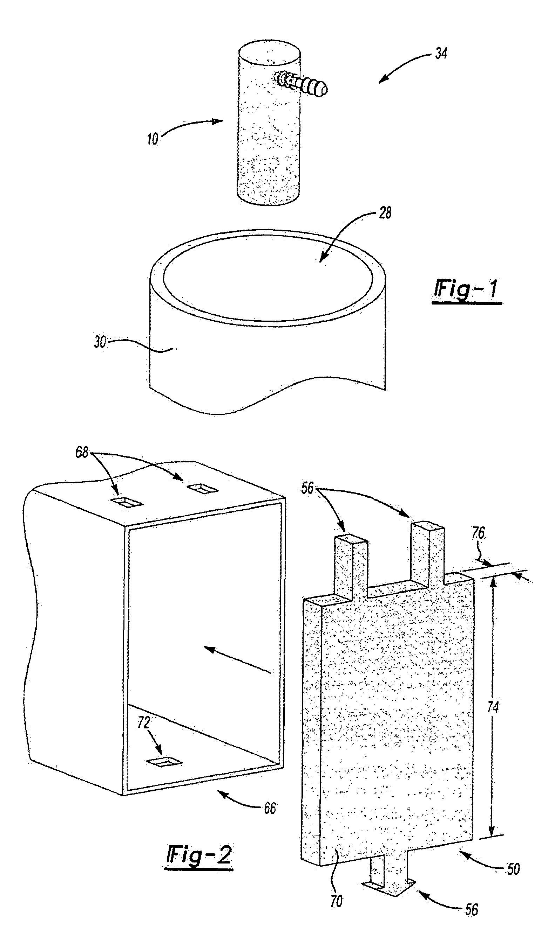

With reference to Fig. 1, a sealer 10 that has undergone first activation according to the present invention is being inserted within a cavity 28 of a structure 30 of an article of manufacture such as a pillar, frame member, body member or the like of an automotive vehicle. The sealer 10, upon second activation, adheres itself to walls of the structure 30 defining the cavity 28 by virtue of expansion of the material, wetting of the walls by the material, curing of the sealant material or a combination thereof. As an example, for automotive applications, the sealant material 10 can be configured to undergo second activation to activate (e.g., expand, foam, cure, adhere, thermoset or a combination thereof) at temperatures experienced in an e-coat or paint bake oven typical to automotive processing. Such temperatures are typically at least about 100 °C, more typically at least about 150 °C and more typically at least about 180 °C and is typically less than about 400 °C, more typically less than about 300 °C, although higher and lower temperatures are possible.

The sealer can be shaped to at least partially correspond to the cavity into which the sealer is inserted, however other shapes, as discussed herein can be desirable. The sealer can be held in a desired position within the cavity by virtue of the shape of the sealer forming an interference fit within the cavity, through the used of fasteners, a combination thereof or the like. As an example, a push pin 34 as shown in Fig. 1 could be extended into the sealer and into an opening of the structure 30 to hold the sealer in place. As another example, the sealant material could be compressed upon insertion of the sealer in the cavity thereby interference fitting the sealer in the cavity. As such, it is preferably that the sealer (e.g., baffle) is without any carrier and that the sealer material is at least 70%, 85%, 95% or greater by volume or weight of the entire sealer. These weight percentages typically hold true for a sealer part that is a finished part ready for installation into vehicle.

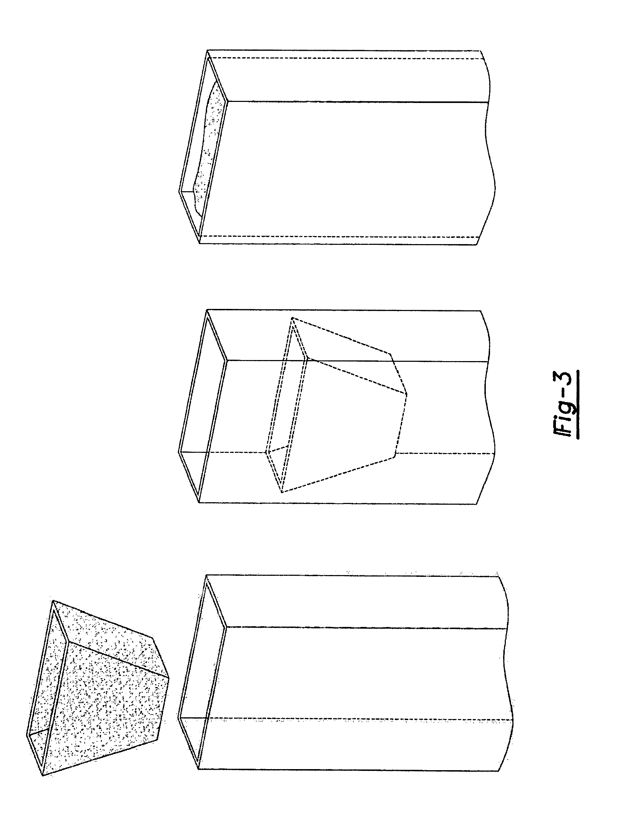

It is additionally contemplated that a sealer according to the present invention can be formed to include extensions (e.g., finger-like extensions) extending outwardly from a body of the sealer. Such extensions can assist in interference fitting a sealer within a cavity. With reference to Fig. 3, a sealer can be formed with a shape having a cross-sectional area that progressively increases along an axis of the sealer from one location (e.g., end) of the sealer to another location (e.g., an opposite end) of the sealer. Such a shape could be, as shown, a cone or wedge shape. As can be seen, the sealer can be interference fit (e.g., wedged) into the cavity and then activated to expand as described herein.

Typically upon insertion and after second activation, the sealer fills a first substantial volume of the cavity and can, if desired, be configured to substantially entirely fill a section of a cavity in which the member has been placed. In such an embodiment, the sealer can typically continuously span across a cross-section of the cavity for inhibiting or prohibiting the passage of mass (e.g., dust and debris) and or sound (e.g., noise) through the cavity and/or acting as a baffle.

The sealer of the present invention is typically or primarily employed for sound (e.g., noise) reduction within an article of manufacture (e.g., used as a baffle within a cavity of an automotive vehicle). It is contemplated, however, that the sealer may be additionally or alternatively used as a separator, a reinforcement, a hole plug, a blocking member, an opening sealer a combination thereof or the like.

The total expansion of the sealer material including any expansion from the first activation and the second activations preferably expands to a volume that is at least 200%, more typically at least 400% and even possibly at least 800% or even at least 1000% of its original volume in its non-expanded state. Thus for a volume of 100 cm³, an expansion of 200% results in a volume of 200 cm³.

With reference to Fig. 2, there is illustrated another exemplary sealer 50 according to the present invention. As can be seen, the sealer 50 is formed entirely of expandable sealer material processed as described herein. The sealer 50 can be formed and processed according to any of the techniques described herein. In one preferred embodiment, the sealer 50 is formed by extruding sealer material and shaping or cutting (e.g., die cutting) the material to form the sealer 50 as shown. The sealer is shaped to include a fastener 56 (e.g., an arrowhead fastener) and at least one, but preferably a plurality of extensions 58. The sealer 50 can be located within a cavity of a structure 66 by extending the extensions 58 into openings 68 of the structure and extending the fastener 56 into an opening 72 of the structure. In this manner, a body 70 of the sealer 50 can substantially span a cross-section of a cavity of the structure prior to expansion of the sealer 50. Then the sealer 50 can be activated to expand and/or cure and span the cavity of the structure as described above. Advantageously, the sealer 50 illustrated is already substantially planar across the cross-section of the cavity of the structure prior to activation. As such, the sealer 50 can span a cross-sectional distance 74 of the cavity that is much greater (e.g., at least 150%, more typically at least 200% and even possibly at least 300%) relative to a thickness 76 that is substantially perpendicular to the cross-sectional distance.

As another alternative, a sealer according to the present invention could be cone shaped. Such a sealer can be wedged into a cavity of a structure.

The following tables: Table A, Table B, Table C and Table D all provide exemplary sealant material according to the present invention. It should be understood that the formulations of the sealant material are exemplary. Since they are merely exemplary, it is contemplated that the weight percents of the various ingredients may vary by ± 50% or more or by ± 30% or ± 10%. For example, a value of 50 ± 10% is a range of 45 to 55. Moreover, ingredients may be added or removed from the formulations.

**TABLE A**

| **Formula** | **Weight Percents** |
|---|---|
| Eva Resin | 7.00 |
| High Viscosity Vinyl Acetate Resin | 10.40 |
| Brominated Polymer | 3.00 |
| Ethylene, butyl acrylate and glycidyl methacrylate | 4.00 |
| Ethylene-n-Butyl Acrylate | 20.00 |
| Acrylate polymer(e.g. Ema) | 4.00 |
| Polyethylene | 6.00 |
| Dicyclopentadienyl-based epoxy resin | 1.00 |
| Hydrocarbon Resin | 5.50 |
| Hydrocarbon tackifier | 7.00 |
| Dipentaerythritol pentaacrylate | 0.80 |
| Calcium Carbonate | 24.00 |
| zinc oxide | 1.00 |
| Peroxy curing agent | 2.00 |
| Blowing agent | 3.00 |
| ADH | 0.10 |
| pigment | 0.20 |
| Peroxy curing agent (lower temperature) | 1.00 |
| | |
| Mix in sigma blade mixer 100° C 30 min | |
| Mix with 1 % Aztec | |
| BP 50 | |
| 9.2 g | |
| 587% VE | |

**TABLE B**

| **Ingredients** | **Weight Percents** |
|---|---|
| Solid Epoxy Resin | 6.60 |
| | |
| Terpolymer with acid functionality | 15.00 |
| Ethylene, methacrylate and glycidyl methacrylate | 6.00 |
| Nitrile Rubber | 4.80 |
| Acrylate Copolymer | 4.00 |
| EVA resin | 22.00 |
| Hydrocarbon Resin | 15.60 |
| | |
| Calcium carbonate | 20.00 |
| pigment | 0.10 |
| Zinc diacrylate | 1.00 |
| peroxy curing agent | 1.00 |
| | |
| Blowing agent/accelerator | 2.90 |
| Blowing agent/accelerator | 1.00 |
| | |
| Mix in sigma blade mixer 100°C 30 min | |
| 680%VE | |

**TABLE C**

| **Ingredients** | **Weight Percents** |
|---|---|
| Solid epoxy resin | 5.00 |
| GMA modified thermoplastic Epoxy Resin | 8.00 |
| Nylon Powder | 10.00 |
| Epoxy resin/aramid fiber | 2.22 |
| Ethylene, methacrylate and glycidyl methacrylate | |
| EMA | 6.00 |
| EVA Resin | 20.00 |
| Hydrocarbon Resin | 12.00 |
| Polybutene | 3.00 |
| Calcium carbonate | 22.84 |
| | |
| Wollastonite | 3.81 |
| Pigment | 0.10 |
| Zinc diacrylate | 1.00 |
| Peroxy curing agent | 1.00 |
| Amine curing agent | 0.63 |
| Blowing agent/accelerator | 2.90 |
| Blowing agent/accelerator | 1.50 |
| | |
| Mix in sigma blade mixer 100°C 30 min | |
| 197% VE | |

**TABLE D**

| **Ingredients** | **Weight Percents** |
|---|---|
| | B |
| | % |
| EPDM | 34.54 |
| | |
| EVA | 6.04 |
| Wax | 5.37 |
| Hydrocarbon resin | 3.57 |
| Cure accelerator | 0.63 |
| Liquid rubber | 6.73 |
| Cure accelerator | 3.27 |
| | |
| Sulfur | 0.90 |
| Sulfur Cure accelerator | 0.90 |
| Blowing agent (stage 2) | 9.76 |
| Blowing agent (stage 1) | 4.00 |
| Process oil | 12.00 |
| Hydrocarbon resin | 12.29 |
| | |
| Total (enter Batch size) | 100 |
| VE % = 800 to 1000 or more | |

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

## Claims

1. A method of baffling or sealing a structure, the method comprising:
providing a sealer, the sealer being formed of an activatable sealant material, wherein:
i. the sealant material undergoes a first activation to expand, cure or both at a first temperature that is at least 10 °C and less than 140 °C ; and
ii. the sealant material is at least 85% by weight of the sealer;
locating the sealer within a cavity of a structure of an automotive vehicle, wherein:
i. the sealant material undergoes a second activation to foam and cure at a second temperature that is at least 150 °C and less than 300 °C and adheres to walls of the structure;
ii. the sealant material expands to a volume that is at least 400% its original unexpanded volume during the first activation, the second activation or both; and
iii. the sealant material exhibits self supporting characteristics during the second activation because of the first activation.

2. A method as in claim 1 wherein the sealer includes a fastener that attaches the sealer to the structure.

3. A method as in claim 2 wherein the fastener is formed of the sealant material.

4. A method as in any of the preceding claims wherein the sealer is a baffle that, after the second activation, continuously spans across a cross-section of the cavity for inhibiting passage of mass, sound or both through the cavity.

5. A method as in any of the preceding claims wherein the step of providing the sealer includes extruding the sealant material at the first temperature of activation.

6. A method as in any of the preceding claims wherein the sealant material includes one or more ethylene based polymers.

7. A method as in claim 6 wherein the one or more ethylene based polymers includes EVA, EMA, EPDM or any combination thereof.

8. A method as in claim 6 or Claim 7 wherein the one or more ethylene based polymers are at least about 10% and less than about 65% by weight of the sealant material.

9. A method as in any of the preceding claims wherein the sealant material includes an acid functionalized elastomer and an epoxy resin that react with each other during the first activation.

10. A method as in any of the preceding claims wherein the sealant material includes a peroxy curing agent and a peroxy-curable polymer that cures during the first activation.

11. A method as in any of the preceding claims wherein the sealant material includes from 1 to 25 wt % of epoxy resin and from 0.01 to 4 wt % epoxy curative that cures the epoxy resin during the first activation.

12. A method as in any of the preceding claims wherein the sealant material includes a blowing agent that foams the sealant material during the first activation.
